# EUROPÄISCHE PATENTSCHRIFT

(11) **EP 2 091 797 B1**
(45) Veröffentlichungstag und Bekanntmachung des Hinweises auf die Patenterteilung: **22.08.2012**
(21) Anmeldenummer: 07820612.5
(22) Anmeldetag: 26.09.2007
(51) Int. Cl.: B60T 8/36, F16K 31/06

(54) **MAGNETVENTIL**
SOLENOID VALVE
ÉLECTROVANNE

(30) Priorität: 16.11.2006 DE 102006054184
(43) Veröffentlichungstag der Anmeldung: 26.08.2009
(73) Patentinhaber: Robert Bosch GmbH, 70442 Stuttgart (DE)
(72) Erfinder: GUGGENMOS, Harald, 87509 Immenstadt/Seifen (DE); RISPLER, Florian, A-6992 Hirschegg (AT); KASPER, Christoph, 87527 Sonthofen (DE); SCHNALZGER, Guenther, 87544 Blaichach (DE); KIRSCHNER, Martin, 87544 Blaichach (DE)
(86) Internationale Anmeldenummer: PCT/EP2007/060217
(87) Internationale Veröffentlichungsnummer: WO 2008/058803

(56) Entgegenhaltungen:
- WO-A-01/00473
- WO-A-01/30626
- WO-A-98/40258
- DE-A1- 4 030 971

## Beschreibung

### Stand der Technik

Die Erfindung betrifft ein Magnetventil nach der Gattung des unabhängigen Patentanspruchs 1.

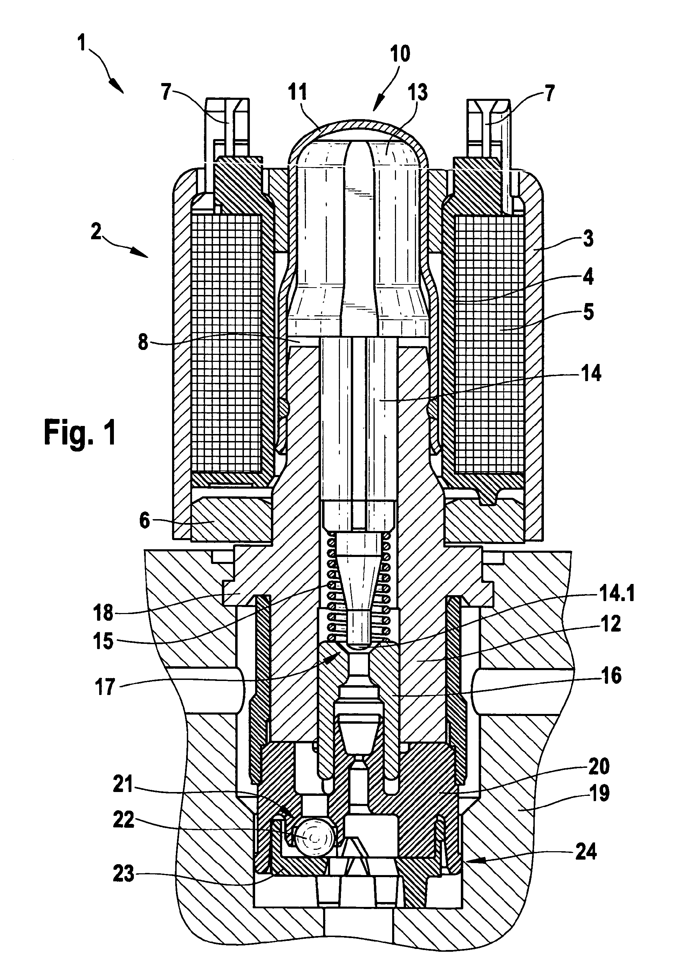

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Fig. 1 dargestellt. Wie aus Fig. 1 ersichtlich ist, umfasst das herkömmliche stromlosoffene Magnetventil 1 eine Magnetbaugruppe 2 zur Erzeugung eines Magnetflusses, die einen Gehäusemantel 3, einen Wicklungsträger 4, eine Spulenwicklung 5 und eine Abdeckscheibe 6 umfasst, und eine Ventilpatrone 10, die eine Kapsel 11, einen Ventiteinsatz 12, der beispielsweise als Kaltschlagteil ausgeführt ist, einen Anker 13 mit einem Stößel 14 und eine Rückstellfeder 15 umfasst. Die Magnetbaugruppe 2 erzeugt eine Magnetkraft, die den längsbeweglichen Anker 13 mit dem Stößel 14 entgegen der Kraft der Rückstellfeder 15 gegen den Ventileinsatz 12 bewegt. Die auf den Wicklungsträger 4 gewickelte Spulenwicklung 5 bildet eine elektrische Spule, die über elektrische Anschlüsse 7 ansteuerbar ist. Der Ventileinsatz 12 leitet den von der Magnetbaugruppe 2 über die Abdeckscheibe 6 eingeleiteten Magnetfluss axial über einen Luftspalt 8 in Richtung Anker 13. Durch Bestromung der Spulenwicklung 5 über die elektrischen Anschlüsse 7 und den dadurch erzeugten Magnetfluss wird der Anker 13 entgegen der Kraft der Rückstellfeder 15 gegen den Ventileinsatz 12 bewegt. Zudem nimmt der Ventileinsatz 12 einen präzisen Ventilkörper 16 auf, der einen Hauptventilsitz 17 umfasst, in welchen der Stößel 14 über ein als Dichtkalotte ausgeführtes erstes Schließelement 14.1 dichtend eintaucht, um die Dichtfunktion des Magnetventils 1 umzusetzen. Wie weiter aus Figur 1 ersichtlich ist, ist in den beispielsweise als Stahlteil ausgeführten Ventilkörper 16 ein aus Kunststoff gefertigtes Ventilunterteil 20 gesteckt, das einen Ventilsitz 21 eines Rückschlagventils aufweist, das eine richtungsorientierte Durchflussfunktion ausführt. Das Ventilunterteil 20 übernimmt sowohl die Führung eines zweiten Schließelements 22 für das Rückschlagventil, als auch die Abdichtung 24 zum Fluidaggregat 19, in dem das Magnetventil 1 über einen am Ventileinsatz 12 angeordneten Verstemmflansch 18 verstemmt ist. Der Hub des zweiten Schließelements 22 wird durch eine Hubbegrenzung 23 bzw. Anlage begrenzt, die in das Ventilunterteii 20 gesteckt ist.

Die Dokumente WO 98/40258 A, WO 01/00473 A und WO 01/30626 A offenbaren jeweils ein Magnetventil mit einer Magnetbaugruppe und einer Ventilpatrone, die eine Kapsel, einen mit der Kapsel verbundenen Ventileinsatz und einen innerhalb der Kapsel beweglich angeordneten Anker umfasst, der einen Stößel mit einem ersten Schließelement umfasst, wobei eine von der Magnetbaugruppe erzeugte Magnetkraft den Anker in Richtung Ventileinsatz bewegt, wodurch das erste Schließelement dichtend in einen Hauptventilsitz eintaucht, und wobei eine auf den Ventileinsatz aufgeschobene Ventilhülse den Hauptventilsitz umfasst.

### Offenbarung der Erfindung

Das erfindungsgemäße Magnetventil mit den Merkmalen des unabhängigen Patentanspruchs 1 hat demgegenüber den Vorteil, dass eine Ventilhülse einen Hauptventilsitz umfasst und auf einen Ventileinsatz aufgeschoben ist. Die Ventilhülse kann in vorteilhafter Weise mit Hilfe der kostengünstigen Tiefziehtechnik hergestellt werden, wobei der eigentliche Ventilsitz durch einen Umformvorgang, vorzugsweise durch Prägen, in das Tiefziehteil eingebracht werden kann. Die Ventilhülse mit dem Hauptventilsitz ist Teil einer Ventilpatrone des erfindungsgemäßen Magnetventils, die beispielsweise zudem eine Kapsel, die mit dem Ventileinsatz verbunden ist, und einen innerhalb der Kapsel beweglich angeordneten Anker umfasst, der einen Stößel mit einem ersten Schließelement umfasst. Zudem umfasst das erfindungsgemäße Magnetventil eine Magnetbaugruppe, die eine Magnetkraft erzeugt, die den Anker in Richtung Ventileinsatz bewegt, wodurch das erste Schließelement dichtend in den Hauptventilsitz eintaucht und diesen schließt. Erfindungsgemäß ist der Ventileinsatz geschlitzt ausgeführt, um in vorteilhafter Weise eine optimierte Strömungsführung der Volumenströme zu ermöglichen.

Durch die in den abhängigen Ansprüchen aufgeführten Maßnahmen und Weiterbildungen sind vorteilhafte Verbesserungen des im unabhängigen Patentanspruch 1 angegebenen Magnetventils möglich.

Besonders vorteilhaft ist, dass die Ventilhülse zusätzlich einen Rückschlagventilsitz umfasst, der beispielsweise ebenfalls durch einen Umformvorgang, vorzugsweise durch Prägen, in die als Tiefziehteil ausgeführte Ventilhülse eingebracht werden kann. Um den Rückschlagventilsitz zu schließen oder zu öffnen, ist ein zweites Schließelement vorhanden, das den Rückschlagventilsitz in Abhängigkeit von der Flussrichtung eines Volumenstroms schließt oder öffnet. Der Hub des zweiten Schließelements wird beispielsweise von einem unterhalb der Ventilhülse angeordneten ersten Filter begrenzt, der beispielsweise als Flachfilter ausgeführt ist.

In Ausgestaltung des erfindungsgemäßen Magnetventils, drückt ein erster Volumenstrom das zweite Schließelement dichtend in den Rückschlagventilsitz, wobei der erste Volumenstrom vom ersten Schließelement geregelt ist, das mit dem Hauptventilsitz zusammenwirkt. Ein zweiter Volumenstrom, der im Bezug auf den ersten Volumenstrom in die entgegengesetzte Richtung fließt, drückt das zweite Schließelement aus dem Rückschlagventilsitz gegen den ersten Filter und öffnet den Rückschlagventilsitz. Der zweite Volumenstrom wird beispielsweise durch einen zweiten Filter gefiltert, der beispielsweise als Radialfilter ausgeführt ist.

Zur Verbindung des erfindungsgemäßen Magnetventils mit einem Fluidaggregat ist beispielsweise die Ventilpatrone über einen an den Ventileinsatz angeformten Verstemmflansch an einem Verstemmbereich im Fluidaggregat verstemmt, wobei die Ventilhülse über eine Pressung gegen das Fluidaggregat abdichtet und die Trennung der Fluidkreise ausführt.

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. In den Zeichnungen bezeichnen gleiche Bezugszeichen Komponenten bzw. Elemente, welche gleiche bzw. analoge Funktionen ausführen.

### Kurze Beschreibung der Zeichnungen

Fig. 1 zeigt eine schematische Schnittdarstellung eines herkömmlichen Magnetventils.

Fig. 2 zeigt eine schematische Schnittdarstellung einer Ventilpatrone eines erfindungsgemäßen Magnetventils.

Fig. 3 zeigt eine Vorderansicht eines in Fig. 2 dargestellten Ventileinsatzes des erfindungsgemäßen Magnetventils.

### Ausführungsformen der Erfindung

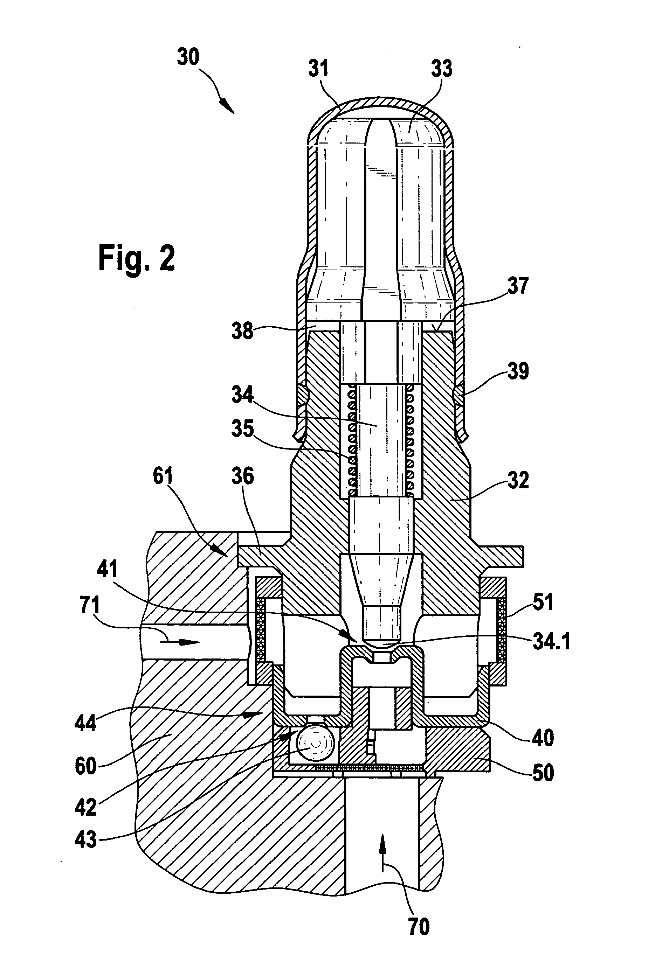

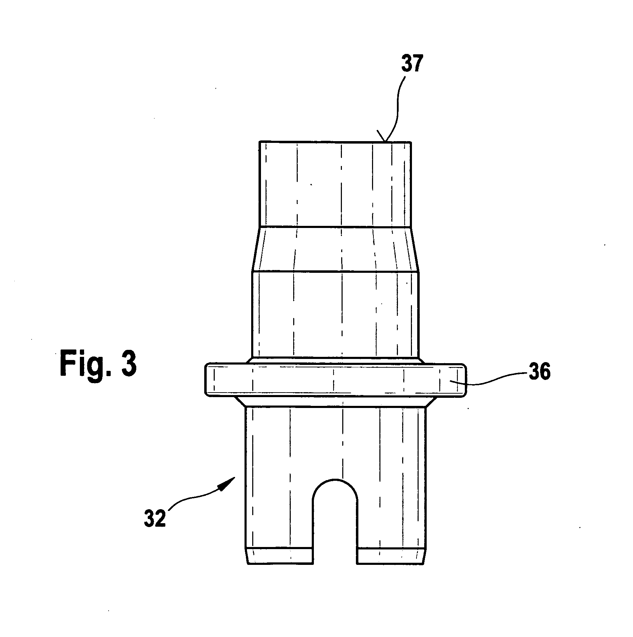

Wie aus Fig. 2 und 3 ersichtlich ist, umfasst eine Ventilpatrone 30 für ein erfindungsgemäßes Magnetventil, beispielsweise für ein stromlosoffenes Magnetventil, eine Kapsel 31, einen geschlitzten Ventileinsatz 32, einen Anker 33 mit einem Stößel 34 und einem ersten Schließelement 34.1, eine Rückstellfeder 35 und eine Ventilhülse 40 mit einem Hauptventilsitz 41 und einem Rückschlagventilsitz 42. Die Ventilhülse 40 ist beispiels weise als Tiefziehteil ausgeführt, in das der Hauptventilsitz 41 und der Rückschlagventilsitz 42 durch einen Umformvorgang, vorzugsweise durch Prägen, eingebracht sind. Die Kapsel 31, in der der Anker 33 längsbeweglich geführt ist, ist auf den Ventileinsatz 32 aufgeschoben und durch eine Dichtschweißung 39, beispielsweise durch eine Laserschweißnaht, an dem geschlitzten Ventileinsatz 32 befestigt. Die Dichtschweißung 39 dient zudem zur Abdichtung nach außen. Der Anker 33 wird durch eine von einer nicht dargestellten Magnetbaugruppe erzeugten Magnetkraft und einen über einen Luftspalt 38 geführten Magnetfluss gegen die Kraft der Rückstellfeder 35 axial gegen eine Polfläche 37 des Ventileinsatzes 32 gezogen. Durch diese Bewegung wird das als erstes Schließelement 34.1 ausgeführte Ende des Stößels 34 in den Hauptventilsitz 41 der Ventilhülse 40 geschoben, so dass ein erster Volumenstrom 70, der von unten gegen das beispielsweise als Dichtkalotte ausgeführte erste Schließelement 34.1 drückt, geregelt werden kann. Die Rückstellfeder 35 hält den Hauptventilsitz 41 im stromlosen Zustand geöffnet.

Um eine größere Durchströmflache zu erzielen, ist ein Rückschlagventil mit einem Rückschlagventilsitz 42 in der Ventilhülse 40 angebracht, der von einem zweiten Schließelement 43, das beispielsweise als Dichtkugel ausgeführt ist, in Abhängigkeit von der Fließrichtung des Volumenstroms geöffnet und geschlossen werden kann. Somit führt das Rückschlagventil eine richtungsorientierte Durchflussfunktion aus. Im dargestellten Ausführungsbeispiel schließt das zweite Schließelement 43 den Rückschlagventilsitz 42, wenn der erste Volumenstrom 70 vorliegt, und öffnet den Rückschlagventilsitz 42, wenn ein zweiter Volumenstrom 71 vorliegt, der eine Fließrichtung aufweist, die der Fließrichtung des ersten Volumenstroms 70 entgegengesetzt ist. Zudem wird der Hub des zweiten Schließelements 43 durch einen ersten Filter 50 begrenzt, der beispielsweise als Flachfilter ausgeführt ist und zudem die Lage des zweiten Schließelements 43 fixiert. Der als Flachfilter ausgeführte erste Filter 50 filtert den ersten Volumenstrom 70, und ein beispielsweise als Radialfilter ausgeführter zweiter Filter 51 filtert den zweiten Volumenstrom 71.

Wie weiter aus Fig. 2 ersichtlich ist, ist die Ventilpatrone 30 des erfindungsgemäßen Magnetventils über einen an den Ventileinsatz 32 angeformten Verstemmflansch 36 an einem Verstemmbereich 61 im Fluidaggregat 60 verstemmt, wobei die Ventilhülse 40 über eine Pressung 44 gegen das Fluidaggregat 60 abdichtet und dadurch eine Trennung der Fluidkreise ausführt.

Die nicht dargestellte Magnetbaugruppe, welche die Magnetkraft und den Magnetfluss erzeugt, um den Anker 33 bei Bestromung gegen die Polfläche 37 des Ventileinsatzes 32 zu bewegen, kann analog zu der in Fig. 1 dargestellten Magnetbaugruppe 2 ausgeführt sein, und einen Gehäusemantel 3, einen Wicklungsträger 4, eine Spulenwicklung 5 und eine Abdeckscheibe 6 umfassen, wobei die auf den Wicklungsträger 4 gewickelte Spulenwicklung 5 eine elektrische Spule bildet, die über elektrische Anschlüsse 7 ansteuerbar ist.

Das erfindungsgemäße Magnetventil weist in vorteilhafter Weise eine geringere Anzahl von Bauteilen auf, die im Gegensatz zu Kunststoffteilen weniger anfällig gegen Temperatur- und Feuchteschwankungen sind und keine Quellneigung aufweisen. In die erfindungsgemäBe Ventilhülse kann sowohl der Hauptventilsitz, als auch der Rückschlagventilsitz geprägt werden. Zudem kann durch die erfindungsgemäße Ventilhülse, die beispielsweise als Tiefziehteil hergestellt wird, ein kostengünstiges Präzisionsteil zur Verfügung gestellt werden, das keine Unrundheiten im Sitzbereich aufweist, die bei dem aus dem Stand der Technik bekannten Präzisionsspritzteil durch einen Verzug während des Spritzprozesses entstehen können.

Das erfindungsgemäße Magnetventil kann beispielsweise in Fluidbaugruppen verwendet werden, die in einem Antiblockiersystem (ABS) oder einem Antriebsschlupfregelsystem (ASR-System) oder einem elektronischen Stabilitätsprogrammsystem (ESP-System) eingesetzt werden.

## Patentansprüche

1. Magnetventil mit einer Magnetbaugruppe und einer Ventilpatrone (30), die eine Kapsel (31), einen mit der Kapsel (31) verbundenen Ventileinsatz (32) und einen innerhalb der Kapsel (31) beweglich angeordneten Anker (33) umfasst, der einen Stößel (34) mit einem ersten Schließelement (34.1) umfasst, wobei eine von der Magnetbaugruppe erzeugte Magnetkraft den Anker (33) in Richtung Ventileinsatz (32) bewegt, wodurch das erste Schließelement (34.1) dichtend in einen Hauptventilsitz (41) eintaucht, und wobei eine auf den Ventileinsatz (32) aufgeschobene Ventilhülse (40) den Hauptventilsitz (41) umfasst, **dadurch gekennzeichnet, dass** der Ventileinsatz (32) geschlitzt ausgeführt ist, wobei zwei axial verlaufende ein-ander gegenüberliegende Aussparungen zur radialen Führung eines Volumenstroms (70, 71) durch den Venfileinsatz (32) hindurch in ein unteres Ende des Ventileinsatzes (32) eingebracht sind, auf welches die den Hauptventilsitz aufweisende Ventilhülse (40) aufgeschoben ist.

2. Magnetventil nach Anspruch 1, **dadurch gekennzeichnet, dass** die Ventilhülse (40) einen Rückschlagventilsitz (42) umfasst.

3. Magnetventil nach Anspruch 2, **dadurch gekennzeichnet, dass** die Ventilhülse (40) als Tiefziehteil hergestellt ist, in das der Hauptventilsitz (41) und der Rückschlagventilsitz (42) durch einen Umformvorgang eingebracht sind.

4. Magnetventil nach Anspruch 2 oder 3, **gekennzeichnet durch** ein zweites Schließelement (43), das in Abhängigkeit von der Fließrichtung des Volumenstroms (70, 71) den Rückschlagventilsitz (42) schließt oder öffnet.

5. Magnetventil nach Anspruch 4, **dadurch gekennzeichnet, dass** der Hub des zweiten Schließelements (43) von einem unterhalb der Ventithülse (40) angeordneten ersten Filter (50) begrenzt ist.

6. Magnetventil nach Anspruch 4 oder 5, **dadurch gekennzeichnet, dass** ein erster Volumenstrom (70), der vom ersten Schließelement (34.1) geregelt ist, das zweite Schließelement (43) dichtend in den Rückschlagventilsitz (42) drückt.

7. Magnetventil nach einem der Ansprüche 4 bis 6, **dadurch gekennzeichnet, dass** ein zweiter Volumenstrom (71) das zweite Schließelement (43) aus dem Rückschlagventilsitz (42) gegen den ersten Filter (50) drückt und den Rückschlagventilsitz (42) öffnet

8. Magnetventil nach Anspruch 5, **dadurch gekennzeichnet, dass** der zweite Volumenstrom (71) durch einen zweiten Filter (51) gefiltert ist.

9. Magnetventil nach einem der Ansprüche 1 bis 8, **dadurch gekennzeichnet, dass** die Ventilpatrone (30) über einen an den Ventileinsatz (32) angeformten Verstemmflansch (36) an einem Verstemmbereich (61) in einem Fluidaggregat (60) verstemmt ist und die Ventilhülse (40) über eine Pressung (44) gegen das Fluidaggregat (60) abdichtet.

## Claims

1. Solenoid valve with a magnet subassembly and with a valve cartridge (30) which comprises a capsule (31), a valve insert (32) connected to the capsule (31), and an armature (33) which is arranged movably inside the capsule (31) and which comprises a tappet (34) with a first closing element (34.1), a magnetic force generated by the magnet subassembly moving the armature (33) in the direction of the valve insert (32), with the result that the first closing element (34.1) penetrates sealingly into a main valve seat (41), and a valve sleeve (40) pushed onto the valve insert (32) comprising the main valve seat (41), **characterized in that** the valve insert (32) is of slotted form, two axially running clearances located opposite one another being introduced, for the radial guidance of a volume flow (70, 71) through the valve insert (32) into a lower end of the valve insert (32), onto which lower end the valve sleeve (40) having the main valve seat is pushed.

2. Solenoid valve according to Claim 1, **characterized in that** the valve sleeve (40) comprises a non-return valve seat (42).

3. Solenoid valve according to Claim 2, **characterized in that** the valve sleeve (40) is produced as a deep-drawn part, into which the main valve seat (41) and the non-return valve seat (42) are introduced by means of a forming operation.

4. Solenoid valve according to Claim 2 or 3, **characterized by** a second closing element (43) which closes or opens the non-return valve seat (42) as a function of the direction of flow of the volume flow (70, 71).

5. Solenoid valve according to Claim 4, **characterized in that** the stroke of the second closing element (43) is limited by a first filter (50) arranged beneath the valve sleeve (40).

6. Solenoid valve according to Claim 4 or 5, **characterized in that** a first volume flow (70), which is regulated by the first closing element (34.1), presses the second closing element (43) sealingly into the non-return valve seat (42).

7. Solenoid valve according to one of Claims 4 to 6, **characterized in that** a second volume flow (71) presses the second closing element (43) out of the non-return valve seat (42) against the first filter (50) and opens the non-return valve seat (42).

8. Solenoid valve according to Claim 5, **characterized in that** the second volume flow (71) is filtered by means of a second filter (51).

9. Solenoid valve according to one of Claims 1 to 8, **characterized in that** the valve cartridge (30) is caulked in a fluid assembly (60) at a caulking region (61) via a caulking flange (36) integrally formed onto the valve insert (32) and seals off the valve sleeve (40) with respect to the fluid assembly (60) via a press fit (44).

## Revendications

1. Électrovanne comprenant un module magnétique ainsi qu'une cartouche d'électrovanne (30) qui comporte une capsule (31), un insert d'électrovanne (32) relié à la capsule (31) et une armature (33) disposée de manière mobile à l'intérieur de la capsule (31), laquelle armature comporte un poussoir (34) doté d'un premier élément de fermeture (34.1), une force magnétique produite par le module magnétique déplaçant l'armature (33) dans la direction de l'insert d'électrovanne (32), de sorte que le premier élément de fermeture (34.1) plonge hermétiquement dans un siège d'électrovanne principal (41), et une douille d'électrovanne (40) enfilée sur l'insert d'électrovanne (32) comportant le siège d'électrovanne principal (41), **caractérisée en ce que** l'insert d'électrovanne (32) est réalisé de manière fendue, deux évidements s'étendant axialement et opposés l'un à l'autre étant ménagés, en vue du guidage radial d'un débit volumique (70, 71) à travers l'insert d'électrovanne (32), dans une extrémité inférieure de l'insert d'électrovanne (32) sur laquelle est enfilée la douille d'électrovanne (40) comportant le siège d'électrovanne principal.

2. Électrovanne selon la revendication 1, **caractérisée en ce que** la douille d'électrovanne (40) comporte un siège de soupape anti-retour (42).

3. Électrovanne selon la revendication 2, **caractérisée en ce que** la douille d'électrovanne (40) est fabriquée sous forme de pièce emboutie dans laquelle le siège d'électrovanne principal (41) et le siège de soupape anti-retour (42) sont ménagés par une opération de façonnage.

4. Électrovanne selon la revendication 2 ou 3, **caractérisée par** un deuxième élément de fermeture (43) qui ouvre ou ferme le siège de soupape anti-retour (42) en fonction du sens d'écoulement du débit volumique (70, 71).

5. Électrovanne selon la revendication 4, **caractérisée en ce que** la course du deuxième élément de fermeture (43) est limitée par un premier filtre (50) disposé en dessous de la douille d'électrovanne (40).

6. Électrovanne selon la revendication 4 ou 5, **caractérisée en ce qu'**un premier débit volumique (70), qui est régulé par le premier élément de fermeture (34.1), presse hermétiquement le deuxième élément de fermeture (43) dans le siège de soupape anti-retour (42).

7. Électrovanne selon l'une quelconque des revendications 4 à 6, **caractérisée en ce qu'**un deuxième débit volumique (71) pousse le deuxième élément de fermeture (43) hors du siège de soupape anti-retour (42) contre le premier filtre (50) et ouvre le siège de soupape anti-retour (42).

8. Électrovanne selon la revendication 5, **caractérisée en ce que** le deuxième débit volumique (71) est filtré par un deuxième filtre (51).

9. Électrovanne selon l'une quelconque des revendications 1 à 8, **caractérisée en ce que** la cartouche d'électrovanne (30) est matée dans une unité fluidique (60) au niveau d'une région de matage (61) au moyen d'une bride de matage (36) formée sur l'insert d'électrovanne (32), et la douille d'électrovanne (40) réalise l'étanchéité au moyen d'une pression (44) contre l'unité fluidique (60).
